# FASCICULE DE BREVET EUROPEEN

(11) **EP 3 343 992 B1**
(45) Date de publication et mention de la délivrance du brevet: **11.12.2019**
(21) Numéro de dépôt: 17207430.4
(22) Date de dépôt: 14.12.2017
(51) Int. Cl.: H04W 16/14, H04W 72/08

(54) **PROCÉDÉ ET DISPOSITIF D' OPTIMISATION DE LA COEXISTENCE DE PICO-RÉSEAUX RADIOÉLECTRIQUES**
VERFAHREN UND VORRICHTUNG ZUR OPTIMIERUNG DER KOEXISTENZ VON PICO-FUNKNETZEN
METHOD AND DEVICE FOR OPTIMISING THE COEXISTENCE OF RADIO PICO NETWORKS

(30) Priorité: 29.12.2016 FR 1663519
(43) Date de publication de la demande: 04.07.2018
(73) Titulaire: Avantix, 13794 Aix-en-Provence (FR)
(72) Inventeur: KELLER, Christophe, 13008 Marseille (FR); VALVERDE, Lucas, 83160 La Valette (FR)
(74) Mandataire: Debay, Damien

(56) Documents cités:
- WO-A1-02/13429
- FR-A1- 2 760 582

## Description

### DOMAINE TECHNIQUE DE L'INVENTION

La présente invention concerne le domaine des télécommunications, en particulier un dispositif et un procédé permettant la coexistence de « pico-réseaux » radioélectrique de plusieurs groupes de télécommunications.

### ARRIERE-PLAN TECHNOLOGIQUE DE L'INVENTION

Un problème dans le domaine des radiocommunications concerne la coexistence radioélectrique, de manière optimale, de plusieurs groupes de télécommunications. En effet, dans un système de radiocommunication ayant une bande de fréquence prédéterminée, les données partagées entre plusieurs modems connectés à un réseau peuvent être facilement interceptés et détournés.

Le document US20140185574 décrit un procédé de coexistence radioélectrique entre deux dispositifs de technologie radio mobile personnel ou PMR, dont l'un est un dispositif à bande étroite et l'autre est un dispositif à large bande, chaque dispositif interagissant par une liaison radioélectrique respectivement avec des stations de base connectées à une unité de contrôle de la ressource radio de leur réseau respectif. Le procédé comprend une étape de détection de présence d'un dispositif émetteur radioélectrique à bande étroite, à proximité du dispositif; une étape de transmission d'un message sur le réseau large bande, adressé à son unité de contrôle, ledit message indiquant la présence d'un potentiel émetteur à bande étroite à proximité dudit dispositif à large bande ; et une étape d'attribution, par l'unité de contrôle associée au réseau à large bande, de nouveaux blocs de fréquences pour des liens montants, seulement dans des périodes allouées prédéfinies. Ce procédé permet uniquement de réduire les interférences ou perturbations subies par le dispositif à bande étroite dans son canal de réception dû à la proximité du dispositif à large bande. Cependant, le procédé et le système de coexistence radioélectrique de ce document ne permet pas la coexistence de « pico-réseaux », de manière optimale, notamment car elle ne prend pas en compte la qualité de communication de chaque connexion pour chaque modem radio et ne permet pas l'allocation des canaux physiques de transmissions en fonction du caractère prioritaire des messages.

Le document EP2543220 décrit un procédé pour allouer à une application des ressources radio parmi des blocs radio partagés dans une bande de fréquence prédéterminée pendant une trame radio périodique entre des stations de base, chaque bloc radio s'étalant sur des fréquences de ladite bande pendant une fente temporelle (slot) de la trame radio et étant susceptible d'être associé à un lien de communication entre une station de base et une station mobile. Le procédé comprend, dans une station de base en réponse à des paramètres de qualité de service requis par l'application: une estimation des taux d'occupation des blocs radio pendant des trames radio consécutives, et une allocation à l'application d'au moins un bloc radio ayant un taux d'occupation inférieur à un seuil et une périodicité exprimée en période de trame et dépendant des paramètres de qualité de service requis. Les paramètres de qualité de service peuvent être classiquement une durée d'allocation maximale et un débit requis pour transmettre des données sur un lien montant ou descendant, ou d'autres paramètres équivalents. Cependant, le procédé et le système d'allocation de ce document, d'une part, ne permet pas une gestion fiable du multiplexage des liaisons entre les modems, et d'autre part, une gestion et une garantie de bande passante selon le caractère prioritaire des paquets de données à envoyer. Un autre exemple est divulgué par WO 02/13429.

### DESCRIPTION GENERALE DE L'INVENTION

La présente invention a pour but de pallier certains inconvénients de l'art antérieur en proposant un procédé d'optimisation de la coexistence de « pico-réseaux » radioélectriques.

Ce but est atteint par un procédé d'optimisation de la coexistence de « pico-réseaux » radioélectriques, chaque «pico-réseau» comportant au moins deux modems interconnectés par un nœud central comprenant au moins une mémoire pour le stockage de données et/ou de programmes informatiques et au moins un processeur, ledit procédé comprenant au moins une étape d'allocation de canaux de communication par le nœud central , pour chacun des modems au moyen d'un algorithme d'allocation, pour permettre la coexistence entre lesdits « pico-réseaux », ledit procédé étant caractérisé en ce que l'étape d'allocation de canaux de communication comprend au moins:
- la détermination du sens de la communication et du débit associé;
- l'optimisation, au moyen d'un algorithme d'optimisation, du débit de transmission des messages et/ou données dans les canaux de communication en fonction du sens de la communication.

Selon une autre particularité de l'invention, l'étape d'allocation de canaux de communication comprend entre autre l'évaluation dynamique, au moyen d'un algorithme d'évaluation, tenant compte de la qualité d'une communication, par trame, pour chaque canal de communication et pour le sens de ladite communication.

Selon une autre particularité de l'invention, l'étape d'allocation comprend également la prise en compte de la gestion des niveaux de priorités des données transmises.

Selon une autre particularité de l'invention, la détermination des canaux de communication s'effectue selon des séquences pseudo-aléatoires à partir de deux tableaux.

Selon une autre particularité de l'invention, les séquences pseudo-aléatoires sont définies en fonction d'au moins :
- les bandes de fréquences pour lesquelles les modems sont configurés ;
- une clé de sécurité propre à l'application pour laquelle lesdits modems sont configurés.

Selon une autre particularité de l'invention, les canaux de communication comprennent au moins un canal physique.

Selon une autre particularité de l'invention, les canaux physiques sont alloués pour des temps de durée fixe regroupés par trame.
Selon une autre particularité de l'invention, les canaux physiques sont déterminés pour des temps de durée fixe (slots) regroupés par trame au moyen d'un algorithme d'étalement de spectre par évasion de fréquence.

Selon une autre particularité de l'invention, les canaux de communication comprennent également des canaux logiques de communication qui sont multiplexés par trame au moyen d'un algorithme de multiplexage temporel.

Selon une autre particularité de l'invention, les canaux logiques de communication sont mappés sur les canaux physiques de communication au moyen d'un algorithme de mappage pour, au moins, la transmission des données entre les modems d'un même groupe formant un pico réseau, la signalisation et le contrôle d'un groupe de modems et l'appariement par authentification et échange de clés entre les modems.

Selon une autre particularité de l'invention, l'optimisation du débit d'au moins un canal logique de transmission de données est spécifique à chaque groupe de modems.

Selon une autre particularité de l'invention, la qualité de communication de chaque modem pour chaque liaison pendant une trame, est évaluée dynamiquement en fonction des acquittements de paquets de signaux reçus et de la mesure des puissances desdits signaux.

Selon une autre particularité de l'invention, les canaux physiques des trames sont répartis équitablement entre les différents canaux logiques et les différents sens de communications.

Selon une autre particularité de l'invention, lorsqu'un message est prioritaire les canaux logiques ne sont plus multiplexés, la trame étant complètement allouée audit message, si plusieurs messages sont prioritaires et présents au même moment, les canaux logiques sont alors multiplexés et la trame, allouée aux différents messages.

La présente invention a pour but de pallier certains inconvénients de l'art antérieur en proposant un dispositif d'optimisation de la coexistence de « pico-réseaux » radioélectrique.

Ce but est atteint par un dispositif d'optimisation de la coexistence de « pico-réseaux » (P) radioélectriques, formés selon une architecture en forme d'étoile, chaque «pico-réseau» comportant plusieurs modems interconnectés en étoile, dont un nœud central comprenant au moins une mémoire pour le stockage de données et/ou de programmes informatiques, relié d'une part à un modem maître et d'autre part aux autres modems, ledit dispositif étant caractérisé en ce que le nœud central comprend également un processeur recevant une balise envoyée par le modem maître au nœud central et aux autre modems pour cadencer le « pico-réseau » et le programme informatique contenant un code exécutable par le processeur pour permettre l'allocation des canaux physiques de communication aux différents modems du « pico-réseau » par le nœud, en optimisant la coexistence des modems de « pico-réseau».

Selon une autre particularité de l'invention, l'allocation de canaux est effectuée de façon pseudo-aléatoire par sélection pour chaque « pico-réseau », des fréquences de canaux affectées à un groupe de modem formant chaque « pico-réseau ».

Selon une autre particularité de l'invention, le nœud central permet de gérer le multiplexage de canaux logiques de communications et la priorité de données.

Selon une autre particularité de l'invention, le nœud central permet également de contrôler l'optimisation du débit des canaux logiques de communication entre les modems.

Selon une autre particularité de l'invention, le nœud central permet d'établir et d'ajuster la qualité de transmission pour chaque canal logique de communication, nécessaire pour la coexistence desdits « pico-réseaux », en fonction de la puissance et/ou le débit des signaux radioélectriques.

Selon une autre particularité de l'invention, le nœud (N) central permet d'allouer dynamiquement une trame en fonction :
- des besoins et la priorité des données d'un canal logique de communication ;
- de la qualité du canal logique couplée à une optimisation dynamique du débit du signal radioélectrique transmettant lesdites données.

Selon une autre particularité de l'invention, le nœud central est un modem.

Selon une autre particularité de l'invention, le modem maître est apte à synchroniser les canaux physiques de communication en fournissant les balises.

Selon une autre particularité de l'invention, que le dispositif permet d'allouer des canaux physiques à chaque modem d'une pluralité de « pico-réseaux », dont le nombre correspond au nombre de fentes temporelles (slot) de la trame.

### DESCRIPTION DES FIGURES ILLUSTRATIVES

D'autres particularités et avantages de la présente invention apparaîtront plus clairement à la lecture de la description ci-après, faite en référence aux dessins annexés, dans lesquels:
- figure 1 représente schématiquement une architecture étoilée des différents modems coexistant dans un « pico-réseau », selon un mode de réalisation de l'invention ;
- figure 2 représente un mode de fonctionnement de la matrice de fréquences « pseudo-aléatoires » d'une trame dans l'allocation des canaux de communication d'un « pico-réseau », selon un mode de réalisation de l'invention.

### DESCRIPTION DES MODES DE REALISATION PREFERES DE L'INVENTION

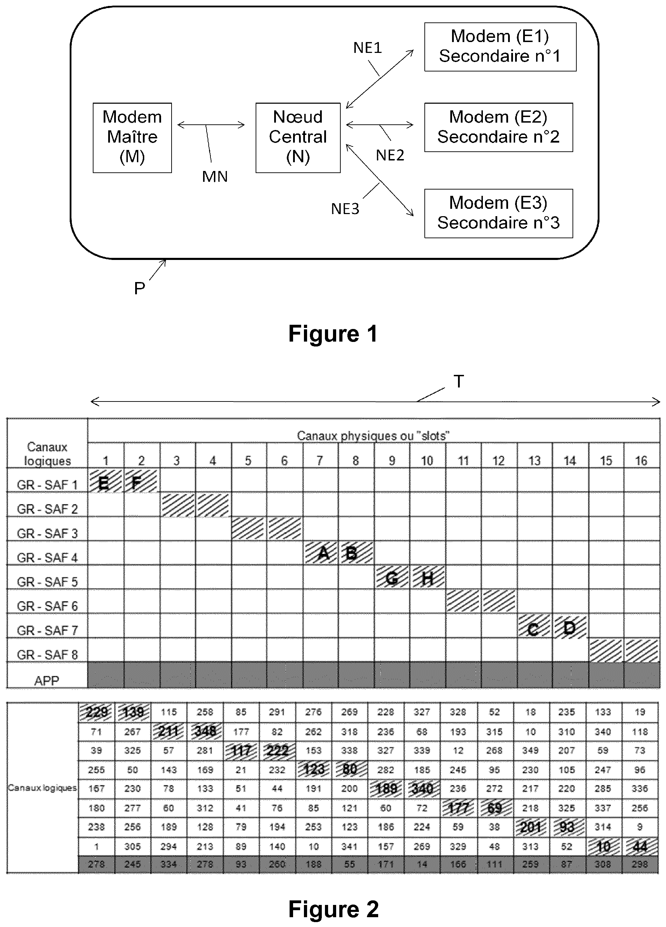

La présente invention concerne un procédé d'optimisation de la coexistence de « pico-réseaux » (P) radioélectriques de plusieurs groupes de télécommunication. On notera que le terme « pico-réseau » est utilisé pour décrire les groupes restreints de télécommunication qui sont définit comme une connexion d'au moins deux modems entre eux. Ainsi, chaque «pico-réseau» comporte, au moins deux modems (E1, E2, E3) secondaires interconnectés entre eux par un nœud (N) central comprenant au moins une mémoire pour le stockage de données et/ou de programmes informatiques et au moins un processeur. Dans certains modes de réalisation, un groupe restreint de télécommunication peut être limité à maximum cinq participants. Comme représenté par exemple sur la figure 1, un groupe de télécommunication est composé d'un nœud (N) central relié à un modem (M) maître et à au plus trois modems (E1, E2, E3) secondaires, dits points terminaux (E1, E2, E3). Le modem (M) maître est connecté par une liaison (MN) avec le modem (N) central ; et les trois points terminaux (E1, E2, E3) sont connectés par des liaisons (NE1, NE2, NE3) avec le nœud (N) central selon une architecture en étoile. Le procédé comprend au moins une étape d'allocation de canaux de communication, pour chacun des modems (M, N, E1, E2, E3) d'un pico-réseau au moyen d'un algorithme d'allocation, exécuté sur un système central pour permettre d'assurer la coexistence entre lesdits « pico-réseaux ». L'allocation de canaux de communication consiste au moins, d'une part, en la détermination du sens de la communication et du débit associé, et d'autre part, en l'optimisation, au moyen d'un algorithme d'optimisation, du débit de transmission des messages et/ou données dans les canaux de communication en fonction du sens de la communication.

Dans certains modes de réalisation, l'allocation consiste aussi en l'évaluation dynamique, au moyen d'un algorithme d'évaluation, de la qualité d'une communication par trame (T), pour chaque canal de communication et par le sens de ladite communication. Une trame permet le transport, pendant une fente temporelle (slot) de la trame, d'un paquet d'information véhiculé entre deux modems à travers un support physique. Cette étape permet d'ajuster automatiquement la puissance d'émission et du débit de transmission d'un message.

Dans certains modes de réalisation, l'étape d'allocation comprend également la gestion des niveaux de priorités des données transmises. En effet les données transmises durant une communication peuvent être de diverses natures. Par exemple et de manière non limitative, dans le cas d'un appel d'urgence un canal prioritaire peut être alloué, afin de transmettre le plus rapidement des instructions concernant l'appel d'urgence.

Dans certains modes de réalisation, les canaux de communication comprennent au moins un canal physique. Par canal physique ou « slot », on entend un intervalle de temps de durée fixe. En effet, le modem ou nœud (N) central pour un ensemble de pico-réseaux ou un système centralisé de surveillance des pico-réseaux utilise une balise envoyée par le Nœud Maître, cette balise sert à cadencer le fonctionnement de chaque pico-réseau et le nœud central (N) alloue des « slots » ou canaux physiques ainsi que des fréquences ou canaux logiques de communication aux différents modems (E) d'un « pico-réseau ».

Dans certains modes de réalisation, les canaux physiques sont alloués pour des temps de durée fixe regroupés par trame.
Dans certains modes de réalisation, les canaux physiques sont déterminés pour des temps de durée fixe (slots) regroupés par trame au moyen d'un algorithme d'étalement de spectre par évasion de fréquence.

Dans certains modes de réalisation, les canaux de communication comprennent également des canaux logiques de communication qui sont multiplexés par trame au moyen d'un algorithme de multiplexage temporel.

Le multiplexage temporel est une technique de traitement de données par mélange temporel ayant pour but de permettre l'acheminement sur un même canal (appelé voie haute vitesse HV), un ensemble d'informations provenant de différents canaux à faibles débits (appelés voies basses vitesses BV) lorsque celles-ci doivent communiquer simultanément d'un même point de départ à un même point d'arrivée. Le multiplexage est dit temporel dans la mesure où les données correspondant à chaque voie ou canal sont intercalées dans le temps. Ce multiplexage permet, entre autres, de faire passer des flux synchrones ou asynchrones sur une liaison synchrone. Les paquets n'arrivant pas nécessairement dans l'ordre d'émission selon les chemins empruntés. Un algorithme de démultiplexage permet alors de réordonner lesdits paquets et de séparer les flux des différents canaux de manière à restituer l'information telle qu'elle était avant le processus de multiplexage.

Le multiplexage permet donc d'atténuer les interférences ou perturbations entre les signaux émis par les différents modems sur les différents canaux, alors que l'étalement de spectre par évasion permet d'offrir une transmission dont la qualité moyenne est améliorée. En effet la qualité d'une communication ou liaison radioélectrique (mesurée par le taux d'erreurs) peut varier avec la fréquence de la porteuse ou onde émise. L'étalement de spectre qui consiste à utiliser alternativement plusieurs canaux (sous-porteuses) répartis dans une bande de fréquence selon une séquence pseudo-aléatoire connue de l'émetteur et du récepteur permet d'atténuer les variations de la qualité de communication. Ainsi, l'étalement de spectre a des avantages par rapport à l'utilisation d'une fréquence unique qui sont les suivantes : le signal transmis est plus résistant aux interférences, le signal est plus difficile à intercepter, et les signaux transmis peuvent partager des bandes de fréquence avec d'autres types de transmission, ce qui permet d'utiliser plus efficacement la bande passante ; le partage des fréquences ajoute un minimum de bruit à l'un et à l'autre type de transmission.

La figure 2 décrit, par exemple et de manière non limitative, la fonctionnalité d"allocation de canaux de communication dans un « pico-réseau » (P) réalisée par le code exécutable.

La communication est donc divisée en trames constituées de canaux physiques, de préférence, ces canaux physiques sont des intervalles de temps de durée fixe (par exemple de 12,5 ms) regroupés par trames de 16 slots. La communication est divisée en cinq trames par seconde, ainsi chaque trame dure un intervalle de temps de 0,20 seconde.

Dans certains modes de réalisation, la détermination des canaux physiques et logiques de communication s'effectue selon des séquences pseudo-aléatoires à partir de deux tableaux enregistrés dans la mémoire d'au moins un nœud (N) central. En effet, les communications de données utilisent plusieurs canaux définis selon un schéma déterminé par deux tableaux dont au moins un formant une matrice de fréquences pseudo-aléatoire. Un premier tableau des canaux physiques (ou « slots » en anglais) représente en colonne les canaux physiques et en ligne le pico-réseau affecté parmi les groupes de pico-réseaux gérés. Le premier tableau définis les slots attribuées à la communication du signalement entre modems pour chaque groupe de modem d'un pico-réseau.

Les cases grisées et hachurées sont les canaux dédiés au signalement entre modems d'un groupe. Les cases neutres sont les canaux dédiés à la communication du groupe. Les cases de couleur grises sont les canaux physiques utilisables par un groupe de modem d'un pico-réseau lors de l'appariement des différents modems d'un groupe.

Les différents canaux logiques du premier tableau, sont déterminés par une matrice de fréquence « pseudo-aléatoire » d'un second tableau, permettant aux différents modems d'un groupe de communiquer (signalement, appariement ou transmission de données) entre eux suivant les fréquences choisies de façon aléatoire dans les cases du second tableau. Ainsi pour le modems E, F du pico réseau SAF1 les fréquences d'appariement seront respectivement celles des canaux logiques 278 et 245, alors que les fréquences pour le signalement seront celles des canaux logiques 229 et 139, les fréquences des autres modems du groupe seront sélectionnées aléatoirement parmi les canaux indiqués dans les deux premières colonnes.

Les canaux de signalement et d'appariement sont calculés, en premiers. Ensuite, les canaux physiques sont calculés et l'unicité est garantie en tenant compte des valeurs précédentes et des canaux de signalement/appariement. Lorsqu'un modem se signale dans une matrice d'allocation, le programme détermine le décalage du modem en slots (numéro de groupe) en fonction des modems déjà découverts. Ainsi, les tableaux permettent d'établir les différentes fréquences de communication, générées de façon aléatoire,.
Les slots n°3 à 16 peuvent être répartis suivant des configurations reposant sur le même principe que pour les slots n°1 et 2.

Dans certains modes de réalisation, les séquences pseudo-aléatoires sont définies en fonction d'au moins :
- les bandes de fréquences pour lesquelles les modems sont configurés ;
- une clé de sécurité propre à l'application pour laquelle lesdits modems sont configurés.
Ces paramètres de définition des séquences pseudo-aléatoires sont propres à chaque déploiement des modems d'un groupe.

Ainsi, un algorithme de mappage peut mapper chaque canal physique avec différents canaux logiques suivants :
- des canaux logiques de signalement et de contrôle d'un groupe de modems ;
- des canaux logiques destinés aux appariements, authentification et échange de clés entre les modems d'un groupe ;
- des canaux logiques de transmission ou de communication de données entre les modems d'un même groupe.
Ces canaux logiques de communications sont mappés sur les canaux physiques de communication au moyen d'un algorithme de mappage constitué par du code exécutable par un processeur pour réaliser les fonctions définies ci-dessus.
Dans certains modes de réalisation, au lieu de se baser sur des tableaux matriciels, les canaux de signalement ou d'appariement sont calculés à partir d'une fonction de génération de nombres « aléatoires » classique et d'une graine. La graine est une valeur quelconque aléatoire permettant d'obtenir un résultat diversifié selon différents paramètres, tels que les bandes de fréquences et la clé de sécurité propre à l'algorithme d'allocation pour lesquelles les modems sont configurés.

Dans certains modes de réalisation, l'optimisation du débit d'au moins un canal logique de transmission de données est spécifique à chaque groupe de modems. Cette optimisation du débit est également une composante de l'allocation des « slots », qui est contrôlée par le nœud (N) central, à travers sa balise. Ainsi, le nœud (N) central établit la qualité de transmission pour chacune des liaisons et ajuste en fonction de la puissance et/ou du débit radio utile. Pour cela, l'algorithme d'allocation et d'optimisation de débit applique un protocole spécifique et différent de l'art antérieur, par le fait :
- de faire varier le débit par unité de durée fixe (slots)
- de combiner l'analyse du bilan radio en entrée (acquittements et RSSI) et la variabilité du débit et de la puissance d'émission en sortie.

Dans certains modes de réalisation, le programme comprend une fonction d'évaluation de la qualité de communication de chaque modem pour chaque liaison pendant une trame (T). Cette qualité est évaluée et/ou réévaluée dynamiquement en fonction des acquittements de paquets de signaux reçus et de la mesure des puissances (RSSI, terme anglophone pour Received Signal Strenght Indication, définissant la puissance du signal reçu) desdits signaux. En effet, en fonctionnement nominal, dans une même trame, le débit des canaux logiques de communication de données est généralement identique et cela correspond au mode de fonctionnement courant des liaisons entre différents modems. Dans le présent procédé, le nombre d'acquittement déterminé pendant un temps et le résultat de mesure de la RSSI sont analysés pour évaluer la qualité de la communication. Un modem pouvant avoir plusieurs connexions, ce mesure de fonctionnement est disponible pour chacune d'elle indépendamment des autres. Les autres canaux logiques (signalement, contrôle, appariements) sont généralement en mode nominal.

Dans certains modes de réalisation, les canaux physiques des trames (T) sont répartis équitablement entre les différents canaux logiques et les différents sens de communications. Par exemple et non limitativement, une communication comprenant cinq trames d'une seconde et pour chaque modem et chaque liaison, il y aura cinq évaluations pendant une trame.

Dans certains modes de réalisation, le programme tient compte d'un indicateur ou drapeau signifiant qu'un message est prioritaire pour interrompre le multiplexage des canaux physiques et procéder au traitement suivant les conditions ci-après., Dans cette hypothèse, la trame (T) est complètement allouée audit message. Si plusieurs messages sont prioritaires et présents au même moment, les canaux physiques sont alors multiplexés et la trame, allouée est répartie en fonction du nombre enregistré des différents messages signalés comme prioritaires. En effet, par défaut, tous les messages ont le même niveau de priorité. Cela signifie que les slots des trames radio sont répartis équitablement entre les différents liens et les différents sens de communication. Lorsqu'un message est prioritaire, les liaisons ne sont plus multiplexées, pour pouvoir allouer complètement la trame radio à ce message prioritaire. Ainsi, le présent procédé permet de garantir une bande passante pour un ou plusieurs messages prioritaire.

Dans certains modes de réalisation, le procédé d'optimisation de la coexistence de « pico-réseaux » radioélectrique comprend pour chaque groupe de modem radio, un ajustement de la puissance et du débit d'émission, une garantie de bande passante selon le caractère prioritaire des paquets à envoyés, tout en garantissant une génération pseudo-aléatoire des clés de cryptage. Ainsi, la trame d'un « pico-réseau » est allouée dynamiquement par le modem (N) central en fonction des besoins et de la priorité d'une liaison au niveau données, et de la qualité de liaison couplée à une optimisation dynamique du débit au niveau radio.

La présente invention concerne également un dispositif d'optimisation de la coexistence de « pico-réseaux » (P) radioélectriques, comprenant une architecture en forme d'étoile, chaque «pico-réseau» comportant plusieurs modems (M, N, E) interconnectés en étoile, dont un nœud ou modem (N) central comprenant au moins une mémoire pour le stockage de données et/ou de programmes informatiques, et un modem (M) maître. Le nœud (N) central du dispositif comprend également un processeur recevant une balise envoyée par le modem (M) maître au nœud (N) pour cadencer le « pico-réseau » et permettre par un programme d'allocation d'allouer des canaux physiques de communication aux différents modems du « pico-réseau » (P) par le nœud (N), via l'exécution du programme sur le processeur, de manière à optimiser la coexistence des modems de « pico-réseau».
Dans certains modes de réalisation, le modem (M) maître fournit la balise d'horloge (« *timestamp* » en anglais) aux autres modems. C'est la réception proprement dite de la balise M qui permet aux autres modems de se synchroniser précisément dans le temps (dérives d'horloges).

En effet, le déclenchement de l'émission de cette balise est calé sur le PPS (Pulse Par Seconde) du GPS (Ground Positioning System) que seul le modem M intègre.

Cette particularité permet à des pico-réseaux (groupes), construits hors de portée radio, de fusionner dans le même environnement radio (multiplexage temps/canal de la matrice fig.2) en limitant les risques d'interférences.

Dans certains modes de réalisation, le dispositif permet d'allouer des canaux physiques à chaque modem d'une pluralité de « pico-réseaux » (P), dont le nombre de pico-réseau correspond au maximum au nombre de slots ou de canaux physiques. Comme représenté par exemple sur la figure 1, le modem (M) maître transmets une balise d'horloge (« *timestamp* » en anglais) pour que le nœud (N) central et les modems (E1, E2, E3) secondaires se calent sur l'horloge du modem maître.

Dans certains modes de réalisation, le nœud central, en fonction de l'horloge du modem maître et des niveaux de priorités des données entre les différents modems d'un groupe du « pico-réseau »., va gérer le multiplexage des liaisons de canaux logiques de communications

Dans certains modes de réalisation, le nœud central permet également de contrôler l'optimisation du débit des canaux logiques de communication entre les modems.

Dans certains modes de réalisation, le nœud central permet d'établir et d'ajuster la qualité de transmission pour chaque canal logique de communication, nécessaire pour la coexistence desdits « pico-réseaux », en fonction de la puissance et/ou du débit des signaux radioélectriques.

Dans certains modes de réalisation, le nœud (N) central permet d'allouer dynamiquement une trame (T) en fonction :
- des besoins et de la priorité des données d'un canal logique de communication ;
- de la qualité du canal logique évaluée et déterminée par une optimisation dynamique du débit du signal radioélectrique transmettant lesdites données.

Dans certains modes de réalisation, l'allocation de canaux est effectuée de façon pseudo-aléatoire par sélection pour chaque « pico-réseau », des fréquences de canaux affectées à un groupe de modem formant le « pico-réseau ». Les fréquences « pseudo-aléatoires » sont établies à partir de deux tableaux, comme représenté par exemple et non limitativement sur la figure 2.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'optimisation de la coexistence de « pico-réseaux » (P) radioélectriques, chaque «pico-réseau» (P) comportant au moins deux modems interconnectés par un nœud (N) central comprenant au moins une mémoire pour le stockage de données et/ou de programmes informatiques et au moins un processeur, ledit procédé comprenant au moins une étape d'allocation de canaux de communication par le nœud central, pour chacun des modems au moyen d'un algorithme d'allocation, pour permettre la coexistence entre lesdits « pico-réseaux » (P), ledit procédé étant caractérisé en ce l'étape d'allocation de canaux de communication comprend au moins:
• la détermination du sens de la communication et du débit associé;
• l'optimisation, au moyen d'un algorithme d'optimisation, du débit de transmission des messages et/ou données dans les canaux de communication en fonction du sens de la communication.

2. Procédé selon la revendication 1, **caractérisé en ce que** l'étape d'allocation de canaux de communication comprend entre autre l'évaluation dynamique, au moyen d'un algorithme d'évaluation, tenant compte de la qualité d'une communication, par trame, pour chaque canal de communication et pour le sens de ladite communication.

3. Procédé selon la revendication 1 ou 2, **caractérisé en ce que** l'étape d'allocation comprend également la prise en compte de gestion des niveaux de priorités des données transmises.

4. Procédé selon les revendications 1 à 3, **caractérisé en ce que** la détermination des canaux de communication s'effectue selon des séquences pseudo-aléatoires à partir de deux tableaux ou d'un calcul effectué.

5. Procédé selon les revendications 1 et 4, **caractérisé en ce que** les séquences pseudo-aléatoires sont définis en fonction d'au moins :
• les bandes de fréquences pour lesquelles les modems sont configurés ;
• une clé de sécurité propre à l'application pour laquelle lesdits modems sont configurés.

6. Procédé selon les revendications 1 à 5, **caractérisé en ce que** les canaux de communication comprennent au moins un canal physique.

7. Procédé selon les revendications 1 et 6, **caractérisé en ce que** les canaux physiques sont alloués pour des temps de durée fixe regroupés par trame.

8. Procédé selon les revendications 6 ou 7, **caractérisé en ce que** les canaux physiques sont déterminés pour des temps de durée fixe (slots) regroupés par trame au moyen d'un algorithme d'étalement de spectre par évasion de fréquence.

9. Procédé selon les revendications 6 ou 8, **caractérisé en ce que** les canaux de communication comprennent des canaux logiques de communication qui sont multiplexés par trame au moyen d'un algorithme de multiplexage temporel.

10. Procédé selon les revendications 1 ou 6 ou 7 ou 8 ou 9, **caractérisé en ce que** les canaux logiques de communication sont mappés sur les canaux physiques de communication au moyen d'un algorithme de mappage pour, au moins, la transmission des données entre les modems d'un même groupe formant un pico-réseau, la signalisation et le contrôle d'un groupe de modems et l'appariement par authentification et échange de clés entre les modems.

11. Procédé selon les revendications 9 ou 10, **caractérisé en ce que** l'optimisation du débit d'au moins un canal logique de transmission de données est spécifique à chaque groupe de modems.

12. Procédé selon la revendication 2, **caractérisé en ce que** la qualité de communication de chaque modem (M, N, E1, E2, E3) pour chaque liaison pendant une trame, est évaluée dynamiquement en fonction des acquittements de paquets de signaux reçus et de la mesure des puissances desdits signaux.

13. Procédé selon les revendications 6 à 11, **caractérisé en ce que** les canaux physiques des trames sont répartis équitablement entre les différents canaux logiques et les différents sens de communications

14. Procédé selon les revendications 9 , **caractérisé en ce que** lorsqu'un message est prioritaire les canaux logiques ne sont plus multiplexés, la trame étant complètement allouée audit message, si plusieurs messages sont prioritaires et présents au même moment, les canaux logiques sont alors multiplexés et la trame, allouée aux différents messages.

15. Dispositif d'optimisation de la coexistence de « pico-réseaux » (P) radioélectriques, comprenant une architecture en forme d'étoile, chaque «pico-réseau» comportant plusieurs modems interconnectés en étoile, dont un nœud (N) central comprenant au moins une mémoire pour le stockage de données et/ou de programmes informatiques, et un modem (M) maître, ledit dispositif étant **caractérisé en ce que** le nœud (N) central comprend également un processeur et reçoit une balise envoyée par le modem (M) maître au nœud pour cadencer le « pico-réseau » (P) et le nœud central permettant l'allocation des canaux physiques de communication aux différents modems (M, E1, E2, E3) du « pico-réseau » (P) par le nœud (N), via l'exécution desdits programmes sur le processeur, de manière à optimiser la coexistence des modems du « pico-réseau», ladite allocation des canaux étant réalisée par la détermination du sens de la communication et du débit associé, et l'optimisation au moyen d'un algorithme d'optimisation, du débit de transmission des messages et/ou données dans les canaux de communication en fonction du sens de la communication.

16. Dispositif selon la revendication 15, **caractérisé en ce que** l'allocation de canaux est effectuée de façon pseudo-aléatoire par sélection pour chaque « pico-réseau » (P), des fréquences de canaux affectées à un groupe de modem formant chaque « pico-réseau » (P).

17. Dispositif selon les revendications 15 à 16, **caractérisé en ce que** le nœud (N) central permet de gérer le multiplexage de canaux logiques de communications et la priorité de données

18. Dispositif selon les revendications 15 et 16, **caractérisé en ce que** le nœud (N) central permet également de contrôler l'optimisation du débit des canaux logiques de communication entre les modems.

19. Dispositif selon les revendications 15 à 18, **caractérisé en ce que** le nœud (N) central permet d'établir et d'ajuster la qualité de transmission pour chaque canaux logiques de communication, nécessaire pour la coexistence desdits « pico-réseaux », en fonction de la puissance et/ou le débit des signaux radioélectriques.

20. Dispositif selon les revendications 15 à 19, **caractérisé en ce que** le nœud (N) central permet d'allouer dynamiquement une trame en fonction
- des besoins et la priorité des données d'un canal logique de communication ;
- de la qualité du canal logique couplée à une optimisation dynamique du débit du signal radioélectrique transmettant lesdites données.

21. Dispositif selon la revendication 15, **caractérisé en ce que** le nœud (N) central est un modem.

22. Dispositif selon la revendication 15, caractérisé en ce le modem (M) maître est apte à synchroniser des canaux physiques de communication en fournissant la balise.

23. Dispositif selon les revendications 15 à 22, **caractérisé en ce qu'**il permet d'allouer des canaux physiques à chaque modem d'une pluralité de « pico-réseaux » (P), dont le nombre correspond au nombre de fentes temporelles (slot) de la trame.

## Patentansprüche

1. Verfahren zur Optimierung der Koexistenz von "Pico-Funknetzen" (P), wobei jedes "Pico-Netz" (P) mindestens zwei Modems umfasst, die durch einen zentralen Knoten (N) umfassend mindestens einen Speicher zum Speichern von Daten und/oder Computerprogrammen und mindestens einen Prozessor miteinander verbunden sind, wobei das Verfahren mindestens einen Schritt der Zuweisung von Kommunikationskanälen durch den zentralen Knoten für jedes Modem mittels eines Zuweisungsalgorithmus umfasst, um die Koexistenz zwischen den genannten "Pico-Netzen" (P) zu ermöglichen, wobei das Verfahren **dadurch gekennzeichnet ist, dass** der Schritt der Zuweisung von Kommunikationskanälen mindestens umfasst:
• die Bestimmung der Kommunikationsrichtung und der zugehörigen Geschwindigkeit;
• die Optimierung mittels eines Optimierungsalgorithmus der Übertragungsgeschwindigkeit der Nachrichten und/oder Daten in den Kommunikationskanälen gemäß der Kommunikationsrichtung.

2. Verfahren nach Anspruch 1, **dadurch gekennzeichnet, dass** der Schritt der Zuweisung von Kommunikationskanälen unter anderem die dynamische Rasterauswertung mittels eines Auswertungsalgorithmus unter Berücksichtigung der Qualität einer Kommunikation für jeden Kommunikationskanal und für die Richtung der Kommunikation umfasst.

3. Verfahren nach Anspruch 1 oder 2, **dadurch gekennzeichnet, dass** der Schritt der Zuweisung ferner die Berücksichtigung der Verwaltung der Prioritätsstufen der übertragenen Daten umfasst.

4. Verfahren nach den Ansprüchen 1 bis 3, **dadurch gekennzeichnet, dass** die Zuweisung der Kommunikationskanäle nach pseudozufälligen Folgen aus zwei Tabellen oder einer durchgeführten Berechnung erfolgt.

5. Verfahren nach den Ansprüchen 1 und 4, **dadurch gekennzeichnet, dass** die pseudozufälligen Folgen nach mindestens Folgendem definiert sind:
• die Frequenzbänder, für die die Modems konfiguriert sind;
• einen für die Anwendung, für die die Modems konfiguriert sind, spezifischen Sicherheitsschlüssel.

6. Verfahren nach den Ansprüchen 1 bis 5, **dadurch gekennzeichnet, dass** die Kommunikationskanäle mindestens einen physikalischen Kanal umfassen.

7. Verfahren nach den Ansprüchen 1 und 6, **dadurch gekennzeichnet, dass** die physikalischen Kanäle für bestimmte Dauerzeiten zugewiesen sind, die nach Rahmen gruppiert sind.

8. Verfahren nach den Ansprüchen 6 oder 7, **dadurch gekennzeichnet, dass** die Kommunikationskanäle physikalischen Kanäle umfassen, die mittels eines Frequenzumgehungs-Spreizspektrum-Algorithmus für feste Dauerzeiten (slots) bestimmt sind, die nach Rastern gruppiert sind.

9. Verfahren nach den Ansprüchen 6 oder 8, **dadurch gekennzeichnet, dass** die Kommunikationskanäle logische Kommunikationskanäle umfassen, die mittels eines Zeitmultiplexalgorithmus nach Rastern gemultiplext werden.

10. Verfahren nach den Ansprüchen 1 oder 6 oder 7 oder 8 oder 9, **dadurch gekennzeichnet, dass** die Kommunikationskanäle auf die physikalischen Kommunikationskanäle mittels eines Zuordnungsalgorithmus für, mindestens, die Übertragung der Daten zwischen den Modems derselben Gruppe, die ein Pico-Netz bilden, die Signalisierung und die Steuerung einer Gruppe von Modems und die Authentifizierungspaarung und den Schlüsselaustausch zwischen Modems zugeordnet sind.

11. Verfahren nach den Ansprüchen 9 oder 10, **dadurch gekennzeichnet, dass** die Optimierung der Geschwindigkeit wenigstens eines logischen Datenübertragungskanals jeder Gruppe von Modems spezifisch ist.

12. Verfahren nach Anspruch 2, **dadurch gekennzeichnet, dass** die Qualität der Kommunikation von jedem Modem (M, N, E1, E2, E3) für jede Verbindung innerhalb eines Rasters unter Berücksichtigung der Quittierungen der empfangenen Signalpakete und der Messung der Stärken der Signale dynamisch ausgewertet wird.

13. Verfahren nach den Ansprüchen 6 bis 11, **dadurch gekennzeichnet, dass** die physikalischen Kanäle der Raster gleichmäßig zwischen den verschiedenen logischen Kanälen und den verschiedenen Kommunikationsrichtungen verteilt sind.

14. Verfahren nach Anspruch 9, **dadurch gekennzeichnet, dass** die logischen Kanäle nicht mehr gemultiplext werden, wenn eine Nachricht Priorität hat, wobei das Raster der Nachricht vollständig zugewiesen ist, wenn mehrere Nachrichten gleichzeitig Priorität haben und anwesend sind, wobei dann die logischen Kanäle gemultiplext und der Rahmen den verschiedenen Nachrichten zugewiesen werden.

15. Vorrichtung zur Optimierung der Koexistenz von "Pico-Funknetzen" (P), umfassend eine sternförmige Architektur, wobei jedes "Pico-Netz" mehrere im Stern verbundene Modems umfasst, und einen zentralen Knoten (N), umfassend mindestens einen Speicher zum Speichern von Daten und/oder Computerprogrammen, und ein Master-Modem (M), wobei die Vorrichtung **dadurch gekennzeichnet ist, dass** der zentrale Knoten (N) weiterhin einen Prozessor umfasst und ein zum Takten des "Pico-Netzes" (P) an den Knoten von dem Master-Modem (M) gesendetes Tag empfängt und wobei der zentrale Knoten (N) die Zuweisung der physikalischen Kommunikationskanäle zu den verschiedenen Modems (M, E1, E2, E3) des "Pico-Netzes" (P) von dem Knoten (N) durch die Ausführung der Programme auf dem Prozessor ermöglicht, um die Koexistenz der Modems des "Pico-Netzes" zu optimieren, wobei die Zuweisung der Kanäle durch die Bestimmung der Kommunikationsrichtung und der zugehörigen Geschwindigkeit und die Optimierung mittels eines Optimierungsalgorithmus der Übertragungsgeschwindigkeit der Nachrichten und/oder der Daten in den Kommunikationskanälen gemäß der Kommunikationsrichtung durchgeführt wird.

16. Vorrichtung nach Anspruch 15, **dadurch gekennzeichnet, dass** die Zuweisung der Kanäle pseudozufällig durch das Auswählen für jedes "Pico-Netz" (P) der Frequenzbänder, die einer Gruppe von Modems zugeordnet sind, die jedes "Pico-Netz" (P) bildet, erfolgt.

17. Vorrichtung nach den Ansprüchen 15 bis 16, **dadurch gekennzeichnet, dass** der zentrale Knoten (N) die Verwaltung des Multiplexverfahrens der logischen Kommunikationskanäle und der Priorität der Daten ermöglicht.

18. Vorrichtung nach den Ansprüchen 15 und 16, **dadurch gekennzeichnet, dass** der zentrale Knoten (N) weiterhin die Steuerung der Optimierung der Geschwindigkeit der logischen Kommunikationskanäle zwischen den Modems ermöglicht.

19. Vorrichtung nach den Ansprüchen 15 bis 18, **dadurch gekennzeichnet, dass** der zentrale Knoten (N) das Feststellen und das Einpassen der Übertragungsqualität für jeden logischen Kommunikationskanal ermöglicht, die für die Koexistenz der "Pico-Netze" gemäß der Stärke und/oder der Geschwindigkeit der Funksignale notwendig ist.

20. Vorrichtung nach den Ansprüchen 15 bis 19, **dadurch gekennzeichnet, dass** der zentrale Knoten (N) die dynamische Zuweisung eines Rasters gemäß Folgendem ermöglicht:
- den Bedürfnissen und der Priorität der Daten eines logischen Kommunikationskanals;
- der Qualität des logischen Kanals, der mit einer dynamischen Optimierung der Geschwindigkeit des Funksignals, das die Daten überträgt, verbunden ist.

21. Vorrichtung nach Anspruch 15, **dadurch gekennzeichnet, dass** der zentrale Knoten (N) ein Modem ist.

22. Vorrichtung nach Anspruch 15, **dadurch gekennzeichnet, dass** das Master-Modem (M) dazu geeignet ist, physikalische Kommunikationskanäle durch das Bereitstellen des Tags zu synchronisieren.

23. Vorrichtung nach den Ansprüchen 15 bis 22, **dadurch gekennzeichnet, dass** sie die Zuweisung von physikalischen Kanälen zu jedem Modem einer Vielzahl von "Pico-Netzen" (P), deren Anzahl der Anzahl von Zeitfenstern (slot) des Rasters entspricht, ermöglicht.

## Claims

1. Method for optimising the coexistence of radio "pico-networks" (P), each "pico-network" (P) comprising at least two modems interconnected by a central node (N) comprising at least one memory for the storage of data and/or computer programs and at least one processor, said method comprising at least one step of allocation of communications channels by the central node, for each of the modems by means of an allocation algorithm, in order to allow coexistence between said "pico-networks" (P), said method being **characterised in that** the step of allocating communications channels comprises at least:
- determination of the direction of communication and of the associated transmission rate;
- optimisation, by means of an optimisation algorithm, of the rate of transmission of messages and/or data in the communications channels as a function of the direction of communication.

2. Method according to claim 1, **characterised in that** the step of allocating communications channels comprises inter alia dynamic evaluation, by means of an evaluation algorithm, taking into account the quality of a communication, per frame, for each communications channel and for the direction of said communication.

3. Method according to claim 1 or 2, **characterised in that** the step of allocation also comprises taking into account management of the levels of priorities of the transmitted data.

4. Method according to claims 1 to 3, **characterised in that** determination of the communications channels is effected according to pseudo-random sequences on the basis of two tables or a calculation carried out.

5. Method according to claims 1 and 4, **characterised in that** the pseudo-random sequences are defined as a function of at least:
- the frequency bands for which the modems are configured;
- a security key particular to the application for which said modems are configured.

6. Method according to claims 1 to 5, **characterised in that** the communications channels comprise at least one physical channel.

7. Method according to claims 1 and 6, **characterised in that** the physical channels are allocated for fixed time slots grouped in frames.

8. Method according to claim 6 or 7, **characterised in that** the physical channels are determined for fixed time slots grouped in frames by means of a frequency-hopping spread spectrum algorithm.

9. Method according to claim 6 or 8, **characterised in that** the communications channels comprise logical communications channels which are multiplexed in frames by means of a time-division multiplexing algorithm.

10. Method according to claim 1 or 6 or 7 or 8 or 9, **characterised in that** the logical communications channels are mapped on the physical communications channels by means of a mapping algorithm for, at least, transmission of the data between the modems of the same group forming a pico-network, signalling and control of a group of modems and pairing by authentication and exchange of keys between the modems.

11. Method according to claim 9 or 10, **characterised in that** optimisation of the transmission rate of at least one logical data transmission channel is specific to each group of modems.

12. Method according to claim 2, **characterised in that** the quality of communication of each modem (M, N, E1, E2, E3) for each link during a frame is evaluated dynamically as a function of acknowledgements of packets of signals received and measurement of the power of said signals.

13. Method according to claims 6 to 11, **characterised in that** the physical channels of the frames are distributed evenly between the different logical channels and the different directions of communications.

14. Method according to claim 9, **characterised in that**, when a message has priority, the logical channels are no longer multiplexed, the frame being completely allocated to said message, and if a plurality of messages have priority and are present at the same moment, the logical channels are then multiplexed and the frame is allocated to the different messages.

15. Device for optimising the coexistence of radio "pico-networks" (P), comprising a star-shaped architecture, each "pico-network" comprising a plurality of modems interconnected in a star shape, including a central node (N) comprising at least one memory for the storage of data and/or computer programs, and a master modem (M), said device being **characterised in that** the central node (N) also comprises a processor and receives a timestamp sent by the master modem (M) to the node in order to timestamp the "pico-network" (P) and the central node allowing allocation of the physical communications channels to the different modems (M, E1, E2, E3) of the "pico-network" (P) by the node (N), via execution of said programs on the processor, so as to optimise the coexistence of the modems of the "pico-network", said allocation of the channels being carried out by determination of the direction of communication and of the associated transmission rate, and optimisation by means of an optimisation algorithm, of the rate of transmission of messages and/or data in the communications channels as a function of the direction of communication.

16. Device according to claim 15, **characterised in that** the allocation of channels is carried out in a pseudo-random manner by selection for each "pico-network" (P), of the frequencies of channels allocated to a group of modems each forming a "pico-network" (P).

17. Device according to claims 15 to 16, **characterised in that** the central node (N) makes it possible to manage the multiplexing of logical communications channels and the priority of data.

18. Device according to claims 15 and 16, **characterised in that** the central node (N) also makes it possible to control optimisation of the transmission rate of the logical communications channels between the modems.

19. Device according to claims 15 to 18, **characterised in that** the central node (N) makes it possible to establish and adjust the quality of transmission for each logical communications channel, necessary for the coexistence of said "pico-networks", as a function of the power and/or transmission rate of the radio signals.

20. Device according to claims 15 to 19, **characterised in that** the central node (N) makes it possible to allocate a frame dynamically as a function of
- the requirements and priority of data of a logical communications channel;
- the quality of the logical channel coupled with dynamic optimisation of the transmission rate of the radio signal transmitting said data.

21. Device according to claim 15, **characterised in that** the central node (N) is a modem.

22. Device according to claim 15, **characterised in that** the master modem (M) is capable of synchronising the physical communications channels by providing the timestamp.

23. Device according to claims 15 to 22, **characterised in that** it makes it possible to allocate physical channels to each modem of a plurality of "pico-networks" (P), of which the number corresponds to the number of times slots of the frame.
